# EUROPÄISCHE PATENTANMELDUNG

(11) **EP 2 196 764 A1**
(43) Veröffentlichungstag der Anmeldung: **16.06.2010**
(21) Anmeldenummer: 09015182.0
(22) Anmeldetag: 08.12.2009
(51) Int. Cl.: G01B 7/012

(54) **Vorrichtung zur Überprüfung der Maße eines mechanischen Werkstückes**

(30) Priorität: 12.12.2008 DE 202008016501 U
(71) Anmelder: Knäbel, Horst, Dipl.-Ing., 40667 Meerbusch (DE)
(72) Erfinder: Knäbel, Horst, Dipl.-Ing., 40667 Meerbusch (DE)
(74) Vertreter: Kossobutzki, Walter

(57) **Zusammenfassung**

Die Erfindung bezieht sich auf eine Vorrichtung zur Überprüfung der Maße eines mechanischen Werkstückes, bestehend aus zwei mit Abstand voneinander angeordneten und jeweils aus einer Induktionsspule und einem Ablenkkörper gebildeten Induktionseinheiten, wobei die Induktionsspulen oder die Ablenkkörper zur Bildung einer Messeinheit mit einem ortsfesten Grundkörper oder einem um eine Achse schwenkbaren und mit einem Tastelement bestückten Balken relativ gegeneinander bewegbar verbunden sind.

Um zu erreichen, dass die Vorrichtung auch bei großen Tasttiefen sehr genau arbeitet, axial belastbar und ohne großen Aufwand gegen das Eindringen von Fremdkörpern und Flüssigkeiten geschützt ist, sind die Induktionseinheiten (11, 20) und das Tastelement (18b) mit erheblichen, unterschiedlichen und frei wählbaren Abständen von der Schwenkachse (16) entfernt angeordnet.

## Beschreibung

Die Erfindung bezieht sich auf eine Vorrichtung zur Überprüfung der Maße eines mechanischen Werkstückes, bestehend aus zwei mit Abstand voneinander angeordneten und jeweils aus einer Induktionsspule und einem Ablenkkörper gebildeten Induktionseinheiten, wobei die Induktionsspulen oder die Ablenkkörper zur Bildung einer Messeinheit mit einem ortsfesten Grundkörper oder einem um eine Achse schwenkbaren und mit einem Tastelement bestückten Balken relativ gegeneinander bewegbar verbunden sind.

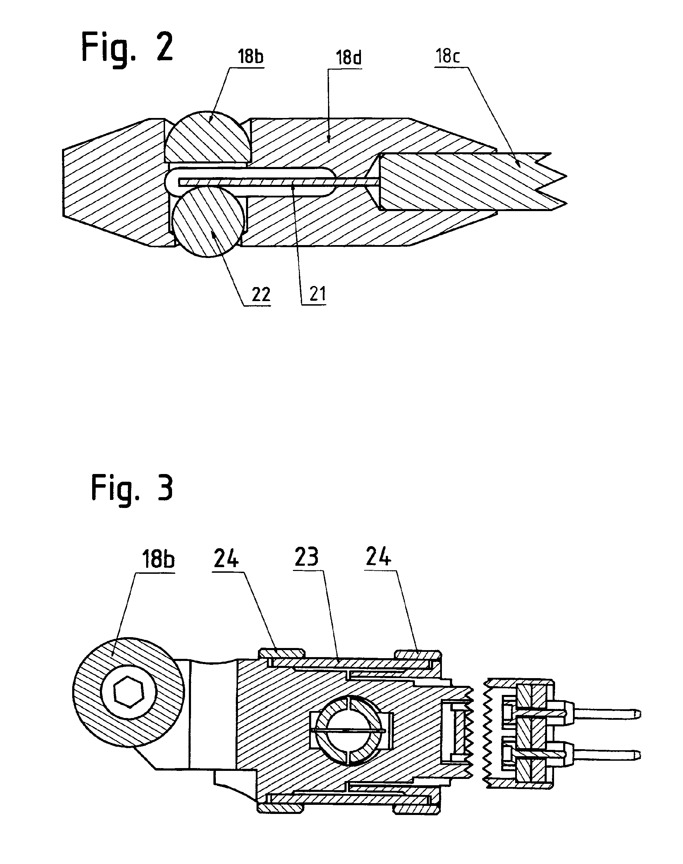

Eine derartige Vorrichtung ist aus der deutschen Offenlegungsschrift 40 23 504 bekannt. Gemäß der Figur 2 der Zeichnung sind bei dieser vorbekannten Vorrichtung die Induktionsspulen gleichgerichtet nebeneinander angeordnet und der die Ablenkkörper tragende Balken ist als schwenkbare Wippe ausgebildet, deren Schwenkachse sich genau mittig zwischen den beiden Induktionsspulen befindet. Bei einer Messung ruft eine Auslenkung des Balkens eine umgekehrt proportionale Änderung der Induktivität in den beiden Induktionsspulen hervor, deren Differenz ein der Schwenkbewegung des Balkens entsprechendes, nahezu lineares Signal ergibt. Das dem Balken zugeordnete Tastelement befindet sich vorzugsweise direkt über einer der beiden Induktionsspulen.

Diese bekannten Messvorrichtungen können äußerst klein ausgebildet werden und werden vorzugsweise dort eingesetzt, wo sie, von einem Messgeräteträger gehalten, als sogenannte Einbaumesstaster direkt an die Messstelle herangeführt werden können. Ausnehmungen, insbesondere sehr kleine Bohrungen, können nur dann gemessen werden, wenn das Tastelement einseitig über den Balken hinausragt. Die funktionsbedingte Anordnung der Schwenkachse mittig zwischen den beiden Induktionsspulen reduziert jedoch die mögliche Tasttiefe zumindest um die halbe Länge des Grundkörpers, so dass bereits bei einer entsprechenden Tasttiefe die Messgenauigkeit auf Grund des dann erforderlichen Hebelverhältnisses verringert wird.

Darüber hinaus sind derartige Messvorrichtungen zur Antastung schräg verlaufender Flächen nicht geeignet, da die die Schwenkachse bildende Blattfeder bei einer axialen Belastung zurückweicht und damit die für eine genaue Messung erforderliche geometrische Symmetrie der Induktionssysteme beeinträchtigt. Schließlich sind diese Messvorrichtungen auf Grund ihrer äußeren Gestalt nur schwer gegen das Eindringen von Fremdkörpern und Flüssigkeiten, wie Staub, Schmutz, Wasser oder Schneidöle, zu schützen, so dass selbst durch die Zufuhr von Spülluft die Verschmutzungsgefahr nur unzureichend verhindert werden kann.

Der Erfindung liegt deshalb die Aufgabe zugrunde, eine Vorrichtung zur Überprüfung der Maße eines mechanischen Werkstückes zu schaffen, die auch bei großen Tasttiefen noch sehr genau arbeitet, die auch axial belastbar und ohne großen Aufwand gegen das Eindringen von Fremdkörpern und Flüssigkeiten zu schützen ist.

Zur Lösung dieser Aufgabe wird gemäß der Erfindung bei einer Vorrichtung der eingangs beschriebenen Gattung vorgeschlagen, dass die Induktionseinheiten und das Tastelement mit erheblichen, unterschiedlichen und frei wählbaren Abständen von der Schwenkachse entfernt angeordnet sind.

Eine derartig ausgebildete Messvorrichtung arbeitet auch bei großen Tasttiefen sehr genau. Sie ist ohne Nachteile auf das Messergebnis auch axial belastbar. Die erfindungsgemäße Messvorrichtung kann bedarfsweise in ein Gehäuse eingesetzt werden, welches den Grundkörper staub- und wasserdicht um schließt. Der Bereich um die Schwenkachse ist problemlos durch ein aufschiebbares schlauchartiges Dichtelement gegen das Eindringen von Fremdkörper und Flüssigkeiten zu sichern.

Weitere Merkmale einer Vorrichtung gemäß der Erfindung sind in den Ansprüchen 2 bis 12 offenbart.

Die Erfindung sowie weitere Vorteile derselben werden nachfolgend anhand eines in einer Zeichnung dargestellten Ausführungsbeispieles näher erläutert. Dabei zeigen
Figur 1 einen Schnitt durch eine Vorrichtung gemäß der Erfindung,
Figur 2 eine mögliche Ausbildung eines Tastelementes und
Figur 3 eine andere Ausbildung eines Tastelementes.

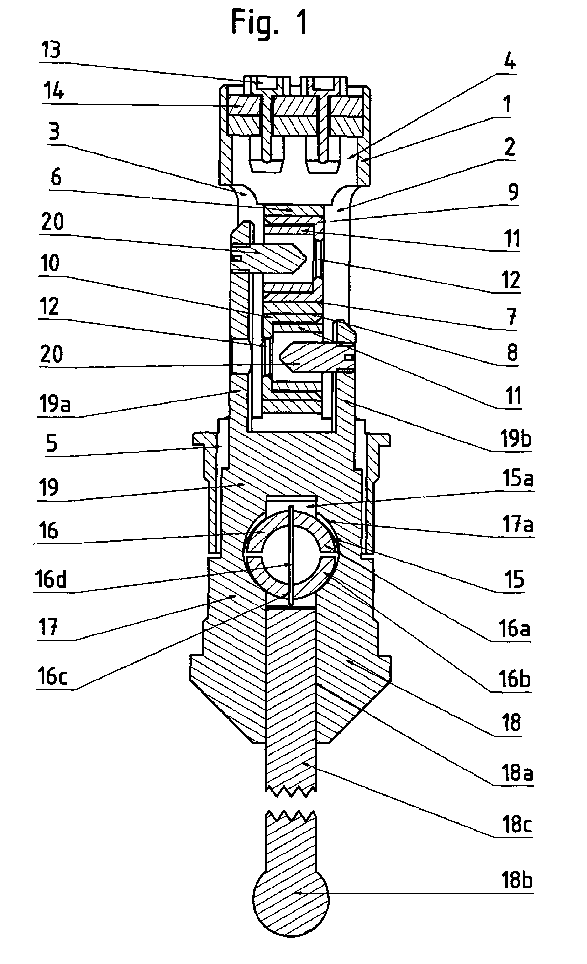

In der Figur 1 der Zeichnung ist eine Vorrichtung zu sehen, die zur Überprüfung der Maße eines mechanischen Werkstückes eingesetzt werden kann. Diese Vorrichtung besteht zunächst aus einem Grundkörper 1, der in diesem Ausführungsbeispiel eine zylindrische Form mit unterschiedlich großen Querschnitten besitzt. In diesen Grundkörper 1 sind einerseits an zwei sich diametral gegenüberliegenden Längsseiten jeweils eine in axialer Richtung verlaufende langlochartige Aussparung 2, 3 und andererseits an jeder Stirnfläche jeweils eine sich nur bis in den Anfangsbereich der Aussparungen 2, 3 erstreckende und ebenfalls in axialer Richtung verlaufende Bohrung 4, 5 eingearbeitet.

Durch diese Formgebung ergibt sich zwischen den beiden langlochartigen Aussparungen 2, 3 und den Bohrungen 4, 5 des Grundkörpers 1 ein Steg 6 mit rechteckigem Querschnitt. In diesen Steg 6 sind zwei mit axialem Abstand voneinander und quer zu Achse des Grundkörpers 1 verlaufende Bohrungen 7, 8 eingearbeitet. In jede dieser Bohrungen 7, 8 ist ein hutartiger Spulenkörper 9, 10 mit einer Induktionsspule 11 eingesetzt. Diese Spulenkörper 9, 10 mit ihren Induktionsspulen 11 - wie in der Zeichnung gut zu erkennen - sind erfindungsgemäß von unterschiedlichen Seiten aus in den Steg 6 eingesetzt, um die Voraussetzung für eine symmetrische Widerstandänderung zu schaffen, die nachfolgend noch näher erläutert wird. Im Hinblick auf die angestrebte Symmetrie besitzt jeder Spulenkörper 9, 10 in seinem Boden eine durchgehende Öffnung 12.

Die beiden Induktionsspulen 11 sind nun über an sich bekannte, jedoch in der Figur 1 der Zeichnung nicht eingezeichnete Drähte an Steckkontakte 13 eines sogenannten Stecksockels 14 angeschlossen, der beispielsweise fest von außen in die Bohrung 4 des Grundkörpers 1 eingesetzt ist.

Der Grundkörper 1 weist im äußeren Randbereich seiner Bohrung 5 zwei radial sich diametral gegenüberliegende Ausnehmungen 15 mit halbkreisförmigem Querschnitt auf, die nach außen offen und nach innen von einer Aussparung 15a unterbrochen sind. In diese Ausnehmungen 15 ist ein sogenanntes, als Schwenkachse dienendes Federelement 16 eingesetzt. Dieses Federelement 16 besteht aus zwei Halbschalen 16a, 16b mit kreisringförmigem Querschnitt, die jeweils einen Winkel von geringfügig kleiner als 180° besitzen. Diese Halbschalen 16a, 16b weisen genau in ihrer Mitte jeweils eine Durchstecköffnung 16c auf, in die mindestens eine sich in axialer Richtung des Grundkörpers 1 erstreckende und vorteilhaft als Blattfeder ausgebildete Feder 16d fest eingesetzt ist. Dies bedeutet, dass die beiden Halbschalen 16a und 16b durch die Feder 16d einerseits fest miteinander verbunden sind und andererseits aufgrund ihres Winkels von kleiner als 180° einen geringfügigen Abstand voneinander aufweisen, was auch die Figur 1 der Zeichnung deutlich erkennen lässt.

Von diesem Federelement 16 ist nun die Halbschale 16a an ihren beiden Enden fest mit den Ausnehmungen 15 des Grundkörpers 1 verbunden. Dies kann beispielsweise durch Schweißung oder Klebung erfolgen. Auf den zwischen den beiden Randbereichen der Bohrung 5 des Grundkörpers 1 befindlichen Teil des Federelementes 16 ist nun - und zwar vor der Verbindung desselben mit dem Grundkörper 1 - ein Doppelhebel 17 mit einer Bohrung 17a aufgeschoben, die geringfügig größer als der Durchmesser des Federelementes 16 ist, um Freigang für die mit dem Grundkörper 1 verbundenen Halbschale 16a zu gewährleisten. Mit diesem Doppelhebel 17 ist die Halbschale 16b fest verbunden. Auch dies kann durch Schweißung oder Klebung erfolgen. Durch dieses als Schwenkachse dienende Federelement 16 ist der Doppelhebel 17 schwenkbar am Grundkörper 1 gehalten, wobei die Feder 16d sicher stellt, dass der Doppelhebel 17 immer eine vorgegebene Grundstellung zum Grundkörper 1 einnimmt.

Der auf dem Federelement gelagerte Doppelhebel 17 besitzt einerseits einen verhältnismäßig kräftigen, nach außen gerichteten Hebelarm 18 mit einer Bohrung 18a, in die ein mit einem Tastelement 18b bestückter Stab 18c eingesetzt ist. Dieses Tastelement 18b ist bei dem Ausführungsbeispiel der Figur 1 als Kugel ausgebildet. Andererseits weist der Doppelhebel 17 einen in den Grundkörper ragenden, als Hebelarm 19 ausgebildeten Balken auf, der an seinem Ende gabelförmig ausgebildet ist und als schwenkbarer Balken mit den beiden, als zylindrische Spulenkerne ausgebildeten Ablenkkörpern 20 bestückt ist. Die Schenkel 19a und 19b des Hebelarms 19 sind so weit von einander entfernt, dass der zwischen ihnen befindliche Steg 6 auch bei voller Auslenkung des Doppelhebels 17 nicht berührt wird und ihre Länge ist so ausgelegt, dass die ihnen zugeordneten Ablenkkörper 20 in Nullstellung konzentrisch in die Induktionsspulen 11 eintauchen.

Wird nun an die Induktionsspulen 11 eine entsprechende, hochfrequente Wechselspannung angelegt, entsteht ein induktiver Widerstand, der sich je nach Eintauchtiefe der Ablenkkörper 20 in die Induktionsspulen 11 ändert. Durch die bei einer Auslenkung des Doppelhebel 17 gegenläufige Eintauchtiefe der beiden Ablenkkörper 20 in die Induktionsspulen 11 ergeben sich unterschiedliche Induktivitäten, deren Differenz sich annähernd proportional zur Auslenkung des Doppelhebels 17 verhält und somit als Messsignal verwendet, angezeigt und weiterverarbeitet werden kann.

Eine solche Auslenkung erfolgt bei einem Messvorgang. Dabei wird ein den Grundkörper 1 aufnehmender Messgeräteträger dem Werkstück zugeführt, so dass das Tastelement 18b zur Anlage an die zu kontrollierenden Werkstückoberfläche gebracht wird. Eine solche Oberfläche kann beispielweise die Wandung einer Bohrung sein. Durch die Anlage des Tastelements 18b wird der Doppelhebel 17 aus seiner vorgegebenen Ausgangsposition gegen die Kraft der Blattfeder 16d des als Schwenkachse dienenden Federelementes 16 geschwenkt, was dann dazu führt, dass sich die Lage der Ablenkkörper 20 in den Induktionsspulen 11 entsprechend dem zu erfassenden Messwert ändert und als Maß der Bohrung angezeigt und ausgewertet werden kann. Die Länge der beiden Hebelarme 18, 19 des am Grundkörper 1 gelagerten Doppelhebels 17 sowie deren Verhältnis zueinander ist grundsätzlich frei wählbar und kann somit der Messaufgabe und damit der geforderten Messgenauigkeit angepasst werden.

Um die auf die Auslenkung des Doppelhebels 17 bezogene Induktivität beider Induktionseinheiten 11, 20 auf den gleichen Wert zu bringen, ist es gemäß einer weiteren Ausbildung der Erfindung möglich, die Anzahl der Windungen sowie die Geometrie der beiden Induktionsspulen 11 und/oder den Durchmesser der Ablenkkörper 20 im Verhältnis des Abstandes deren Spulenmitte zur Schwenkachse so festzulegen, dass das Produkt aus diesem Abstand und der Induktivität beider Induktionseinheiten 11, 20 gleich ist. Aufgrund der Tatsache, dass das Induktionssystem der erfindungsgemäßen Vorrichtung völlig frei von äußeren Einflüssen und damit frei von Reib- und Hystereseverlusten und der Schwenkwinkel des Doppelhebels 17 relativ gering ist, ist eine sehr hohe Messgenauigkeit zu erzielen. Diese Messgenauigkeit wird noch dadurch positiv beeinflusst, dass auch bei sehr großen Messtiefen der Messbereich der Messaufgabe entsprechend gering gehalten werden kann. Je nach Aufgabenstellung ist es möglich, die Winkelstellung des Doppelhebels 17 gegenüber dem Grundkörper 1 beliebig zu wählen. Vorzugsweise sind jedoch Grundkörper 1 und Doppelhebel 17 in Nullstellung der Messvorrichtung unabhängig von einer vorgebbaren Ausgangswinkelstellung koaxial zueinander ausgerichtet.

Gemäß der Figur 2 der Zeichnung ist an dem Stab 18c ein auswechselbarer Tastkopf 18d befestigt, bei dem dem eigentlichen Tastelement 18b eine lose, aber unter der Kraft einer Feder 21 an der Wandung einer Bohrung anlegbare Kugel 22 zugeordnet ist. Dadurch ist in dem als Schwenkachse dienenden Federelement 16 keine besondere Vorspannung erforderlich, um über das Tastelement 18b die Lage der Wandung einer Bohrung zu einer Bezugsebene hin ausmessen zu können.

Gemäß der Figur 3 der Zeichnung ist an dem Hebelarm 18 des Doppelhebels 17 kein Stab 18c angebracht. Hier trägt der Hebelarm 18 direkt das Tastelement 18b, welches als auswechselbare Radiusscheibe ausgebildet ist. Diese Scheibe ermög licht eine günstige Einlaufschräge und kann bei Verschleiß umgesetzt und/oder ausgewechselt werden.

Die vorbeschriebene Messvorrichtung kann bedarfsweise in ein weitgehend beliebig ausgebildetes Gehäuse eingesetzt und/oder auf einen Träger aufgeschraubt oder festgeklemmt werden. Durch das Gehäuse wird der Grundkörper 1 dichtend umschlossen. Über ein schlauchförmiges Dichtelement 23 (Figur 3), beispielsweise einen Silikonschlauch, können die Öffnungen im Bereich des Federelementes 16 ebenfalls dicht verschlossen werden. Auf diesem Dichtelement 23 können nach dem Aufziehen desselben Hülsen 24 aufgeschoben werden, die so dimensioniert sind, dass das Dichtelement 23 beidseitig unter Vorspannung auf einem vom Federelement 16 aus nach innen gerichteten Ansatz des Grundkörpers 1 und dem nach außen gerichteten Hebel 18 zur Auflage kommt. Diese Hülsen 24 können zusätzlich noch durch Klebung fixiert sein.

Die erfindungsgemäße Messvorrichtung kann allein oder mit weiteren Messvorrichtungen zusammen auf bzw. in einen der Messaufgabe entsprechenden Messgeräteträger montiert werden oder als Tastkopf in eine sogenannte Koordinatenmessmaschine eingesetzt werden.

Es ist auch möglich, den Hebelarm 18 des Doppelhebels über ein äußeres Betätigungsorgan, beispielsweise einen Pneumatikkolben, wechselweise zu betätigen, so das mit dem Tastelement 18b eine Bohrung oder eine Nut beidseitig angetastet werden kann. Auf diese Weise können aus der beidseitigen Auslenkung und dem Durchmesser eines kugelförmigen Tastelements 18b der Durchmesser der Bohrung oder die Breite der Nut ermittelt werden.

Je nach Größe der Messvorrichtung kann es besonders vorteilhaft sein, dass je ein Federelement 16 beidseitig dem Doppelhebel 17 zugeordnet wird, da bei dieser Ausgestaltung der Doppelhebel 17 nicht mehr vom einteiligen Federelement 16 durchdrungen und damit geschwächt werden muss, ohne Einschränkungen hinsichtlich der Federstabilität hinnehmen zu müssen.

Erfindungsgemäß ist es auch möglich, das Federelement 16 als Federparallelogramm auszubilden. Dies entspricht theoretisch einem unendlich großen Abstand zwischen der Schwenkachse und den Induktionsspulen 11, so dass aus der Schwenkbewegung eine Parallelbewegung wird. Bei einer solchen Messvorrichtung mit parallel geführtem Doppellhebel 17 ist die Anzahl der Windungen beider Induktionsspulen 11 gleich auszulegen. Durch die Parallelführung wird die Auslenkung des Tastelements 18b im Verhältnis 1:1 auf die Ablenkkörper 20 übertragen, so dass sich eine gegenläufige, der Auslenkung gleiche Eintauchtiefenänderung der beiden Ablenkkörper 20 in den Induktionsspulen 11 einstellt.

### Bezugszahlenliste

Zu Figur 1
- 1: Grundkörper
- 2: Langlochartige Aussparung
- 3: Langlochartige Aussparung
- 4: Bohrung
- 5: Bohrung
- 6: Steg
- 7: Bohrungen für Spulenkörper
- 8: Bohrungen für Spulenkörper
- 9: Spulenkörper
- 10: Spulenkörper
- 11: Induktionsspulen
- 12: Öffnungen im Spulenkörper
- 13: Steckkontakt
- 14: Stecksockel
- 15: halbkreisförmige Ausnehmung im Grundkörper
- 16: Federelement
16a Halbschale
16b Halbschale
16c Durchstecköffnung
16d Feder
- 17: Doppelhebel
- 18: Hebelarm
18a Bohrung
18b Tastelement
18c Stab
- 19: Hebelarm
19a Schenkel
19b Schenkel
- 20: Ablenkkörper

### Zu Figuren 2 und 3

- 21: Feder
- 22: Kugel
- 23: Dichtelement
- 24: Hülsen

## Patentansprüche

1. Vorrichtung zur Überprüfung der Maße eines mechanischen Werkstückes, bestehend aus zwei mit Abstand voneinander angeordneten und jeweils aus einer Induktionsspule und einem Ablenkkörper gebildeten Induktionseinheiten, wobei die Induktionsspulen oder die Ablenkkörper zur Bildung einer Messeinheit mit einem ortsfesten Grundkörper oder einem um eine Achse schwenkbaren und mit einem Tastelement bestückten Balken relativ gegeneinander bewegbar verbunden sind,
**dadurch gekennzeichnet,**
**dass** die Induktionseinheiten (11, 20) und das Tastelement (18b) mit erheblichen, unterschiedlichen und frei wählbaren Abständen von der Schwenkachse (16) entfernt angeordnet sind.

2. Vorrichtung nach Anspruch 1,
**dadurch gekennzeichnet,**
**dass** für beide Induktionseinheiten (11, 20) das Produkt aus der Induktivität und dem Abstand derselben von der Schwenkachse (16) gleich ist.

3. Vorrichtung nach Anspruch 1 oder 2,
**dadurch gekennzeichnet,**
**dass** die Induktionsspulen (11) und die Ablenkkörper (20) der Induktionseinheiten(11, 20) in ihrer Wirkebene, vorzugsweise in geringen Abstand hintereinander angeordnet, gegenläufig wirksam und jeweils parallel zueinander ausgerichtet sowie rechtwinklig mit dem sie tragenden Grundkörper (1) bzw. Balken verbunden sind.

4. Vorrichtung nach Anspruch 1 oder 2,
**dadurch gekennzeichnet,**
**dass** der schwenkbare Balken (19) durch einen einschenkeligen Hebelarm eines Doppelhebels (17) gebildet ist.

5. Vorrichtung nach mindestens einem der Ansprüche 1 bis 4,
**dadurch gekennzeichnet**,
der schwenkbare Balken (19) im Bereich der Induktionsspulen (11) oder der Ablenkkörper (20) gabelförmig ausgebildet ist und jeder Schenkel (19a, 19b) jeweils einen Ablenkkörper (20) oder eine Induktionsspule (11) aufnimmt.

6. Vorrichtung nach mindestens einem der Ansprüche 1 bis 5,
**dadurch gekennzeichnet,**
**dass** die Ablenkkörper (20) als in die Induktionsspulen (11) eintauchende Spulenkerne ausgebildet sind.

7. Vorrichtung nach mindestens einem der Ansprüche 1 bis 6,
**dadurch gekennzeichnet,**
**dass** die Schwenkachse (16) als Federelement ausgebildet ist.

8. Vorrichtung nach mindestens einem der Ansprüche 1 bis 7,
**dadurch gekennzeichnet,**
**dass** das Federelement (16) aus mindestens einer in Richtung der Achse des Grundkörpers (1) verlaufenden Blattfeder (16d) gebildet ist.

9. Vorrichtung nach mindestens einem der Ansprüche 1 bis 8,
**dadurch gekennzeichnet,**
**dass** der Grundkörper (1) in einem dichten Gehäuse staubund wasserdicht eingesetzt, eine Kabeldurchführung ebenfalls staub- und wasserdicht ausgeführt und der Bereich um das Federelement (16) von einem schlauchartigen Dichtelement umschlossen ist.

10. Vorrichtung nach Anspruch 9,
**dadurch gekennzeichnet,**
**dass** das Federelement (16) als Federparallelogramm ausgebildet ist.
